# EUROPÄISCHE PATENTSCHRIFT

(11) **EP 1 515 882 B1**
(45) Veröffentlichungstag und Bekanntmachung des Hinweises auf die Patenterteilung: **14.02.2007**
(21) Anmeldenummer: 03738026.8
(22) Anmeldetag: 13.06.2003
(51) Int. Cl.: B60T 8/00

(54) **ELEKTROPNEUMATISCHE ANHÄNGERBREMSANLAGE SOWIE VERFAHREN ZUM BETRIEB DERSELBEN**
ELECTROPNEUMATIC TRAILER BRAKE SYSTEM AND METHOD FOR OPERATING THE SAME
SYSTEME DE FREINAGE ELECTROPNEUMATIQUE DE REMORQUE ET SON PROCEDE DE FONCTIONNEMENT

(30) Priorität: 14.06.2002 DE 10226623
(43) Veröffentlichungstag der Anmeldung: 23.03.2005
(73) Patentinhaber: KNORR-BREMSE SYSTEME FÜR NUTZFAHRZEUGE GMBH, 80809 München (DE)
(72) Erfinder: MEDERER, Martin, 80809 München (DE)
(86) Internationale Anmeldenummer: PCT/EP2003/006240
(87) Internationale Veröffentlichungsnummer: WO 2003/106236

(56) Entgegenhaltungen:
- EP-A- 1 167 141
- DE-A- 10 034 222
- DE-A- 10 128 692
- DE-A- 19 858 583
- DE-C- 19 829 489
- WREDE J ET AL: "BRAKE BY WIRE FOR COMMERCIAL VEHICLES" , SAE TRANSACTIONS, SOCIETY OF AUTOMOTIVE ENGINEERS, INC., WARRENDALE, PA, US, VOL. 101, NR. 922489, PAGE(S) 849-859 XP000473008 ISSN: 0096-736X das ganze Dokument

## Beschreibung

Die Erfindung betrifft ein Verfahren zum Betrieb einer elektropneumatischen Anhängerbremsanlage, wobei jeder Seite wenigstens einer Anhängerachse, wenigstens zwei Steuerventile zugeordnet sind, mittels der ein einem Bremswunsch entsprechender Druck, der auf wenigstens ein Bremsaggregat der wenigstens einen Anhängerachse wirkt, gesteuert wird. Die Erfindung betrifft ferner eine elektropneumatische Anhängerbremsanlage, umfassend eine elektronische Steuer und/oder Regelvorrichtung zum Erfassen und/oder Verarbeiten des Betriebszustandes des Anhängers und zum Steuern und/oder Regeln von Ventilen der Anhängerbremsanlage.

Elektropneumatische Anhängerbremsanlagen sind bekannt. So wird beispielsweise eine derartige Bremsanlage von der Anmelderin vertrieben, wobei insbesondere ein elektronisches Bremssystem bzw. ein Modul eines entsprechenden elektronischen Bremssystems in einer Anhängerbremsanlage eingebracht werden kann, so dass eine elektropneumatische Anhängerbremsanlage zur Verfügung gestellt wird. Eine derartige elektropneumatische Anhängerbremsanlage hat die Funktion, nach Erhalt entsprechender Betriebsdaten wie Fahrzeuggeschwindigkeit, Drehzahl der entsprechenden Räder an den Achsen des Anhängers und Beladungszustand eine optimale Bremswirkung auch mit Antiblockierfunktion zu gewährleisten. Hierzu werden mittels einer elektronischen Steuer und/oder Regelvorrichtung entsprechende Messwerte aufgenommen und diese verarbeitet, um entsprechende elektropneumatische Ventile für die gewünschte Bremsfunktion anzusteuern. Als Zusatzfunktion ist auch beispielsweise eine automatische Schlupfregulierung vorgesehen bzw. eine automatische lastabhängige Bremse möglich. Eine automatische lastabhängige Bremse ist beispielsweise in der DE 102 07 803.3 der Anmelderin beschrieben.

Aus der DE 198 29 489 C1 ist ferner eine Einrichtung zur Strom- und/oder Spannungsversorgung eines Fahrzeuganhängers für die Versorgung von Bremskomponenten bekannt. Hierbei ist vorgesehen, dass wenigstens eine zweite Versorgungsleitung vorgesehen ist, durch die der Fahrzeuganhänger mit dem Zugfahrzeug verbindbar ist. Hierbei wird beispielsweise eine StopplichtVersorgungsleitung verwendet, um als Strom- und/oder Spannungsversorgungsleitung für die Versorgung der elektropneumatischen Anhängerbremsanlage zu dienen.

Es ist Aufgabe der vorliegenden Erfindung, ein Verfahren zum Betrieb einer elektropneumatischen Anhängerbremsanlage und eine elektropneumatische Anhängerbremsanlage anzugeben, die in deren Funktion sehr variabel gehalten werden kann und mit der auch in den verschiedensten Zuständen eine ausreichende und effektive Bremsfunktion ermöglicht ist, wobei insbesondere Zusatzbremsfunktionen wie beispielsweise ein Roll-Over-Schutz ermöglicht sein soll.

Gelöst wird diese Aufgabe durch ein Verfahren zum Betrieb einer elektropneumatischen Anhängerbremsanlage, wobei jeder Seite wenigstens einer Anhängerachse wenigstens zwei Steuerventile zugeordnet sind, mittels der ein einem Bremswunsch entsprechender Druck, der auf wenigstens ein Bremsaggregat der wenigstens einen Anhängerachse wirkt, gesteuert wird, wobei nur ein Steuerventil zur Zeit zur Steuerung des Drucks für das wenigstens eine Bremsaggregat angesteuert wird, wobei jeder Seite außerdem ein Backup-Ventil zugeordnet ist, wobei das Backup-Ventil bei vorhandener Strom- und/oder Spannungsversorgung der Anhängerbremsanlage in einer Druckluft nicht durchleitenden Stellung gehalten wird.

Durch das erfindungsgemäße Verfahren ist es möglich, sämtliche Bremsfunktionen und auch weitere Funktionen der Anhängerbremsanlage zur Verfügung zu stellen, auch wenn nur eine Versorgungsleitung zur Versorgung der Anhängerbremsanlage mit Strom und/oder Spannung vorgesehen ist, die für weniger Last ausgelegt ist, als für sämtliche elektrischen Verbraucher an sich benötigt werden würde. Durch das erfindungsgemäße Verfahren ist ein besonders bevorzugter Betrieb einer Anhängerbremsanlage möglich, wenn die Hauptversorgungsleitung nicht gesteckt ist bzw. ausgefallen ist. Es handelt sich hierbei somit um eine besonders bevorzugte Betriebsweise der Anhängerbremsanlage unter Verwendung der Erfindung gemäß der DE 198 29 489 C1.

Im Rahmen der Erfindung bedeutet der Begriff "Ansteuern" insbesondere auch Betätigen bzw. das Betätigen eines Stellgliedes, das vorzugsweise einen Elektromagneten umfasst. Die Steuerventile sind vorzugsweise elektrisch betätigbare Ventile, bei dem als Stellglied ein Elektromagnet umfasst ist. Die Steuerventile sind vorzugsweise übliche Belüftungsventile und Entlüftungsventile. Im Rahmen der Erfindung umfasst der Begriff Betriebszustand einzelne Zustände des Anhängers, wie Beladung, Geschwindigkeit, Drehzahl der Räder, Drücke in Leitungen und weitere, als auch die Gesamtheit dieser physikalischen Werte.

Da jeder Seite außerdem ein Backup-Ventil zugeordnet ist, wobei das Backup-Ventil bei vorhandener Strom- und/oder Spannungsversorgung der Anhängerbremsanlage in einer Druckluft nicht durchleitenden Stellung gehalten wird, ist ein rein pneumatisches Bremsen möglich. Im stromlosen Fall ist dann nämlich das Backup-Ventil in einer Druckluft durchleitenden Stellung, so dass die Druckluft aus einer Steuerleitung zum Ansteuern von entsprechenden Ventilen zur Verstärkung des Bremsdruckes an den Bremsaggregaten verwendbar ist.

Eine besonders gute Funktionalität ist dann gegeben, wenn das jeweilige Steuerventil in einem Zeitraum zwischen 5 ms und 100 ms, vorzugsweise zwischen 10 ms und 100 ms, angesteuert wird. Bei einer entsprechenden Anhängerbremsanlage sind also wenigstens vier Steuerventile, nämlich je ein Belüftungsventil auf jeder Seite und ein Entlüftungsventil auf jeder Seite vorgesehen.

Erfindungsgemäß wird in einem entsprechenden Zeitraum jeweils nur ein Ventil angesteuert, so dass nur ein Ventil aus der stromlosen Stellung in die bestromte Stellung zur Zeit überführt wird. Die Auswahl, welches Ventil zur Zeit bestromt wird, hängt zum einen vom Bremswunsch des Fahrers ab, der durch Betätigung des Bremspedals ermittelt werden kann, beispielsweise durch die Schnelligkeit der Betätigung, die ausgeübte Kraft bei der Betätigung oder den Druck in einer Steuerleitung und naturgemäß von der Betriebsweise des Fahrzeugs wie beispielsweise Geschwindigkeit, Beladung und ähnlichem. Durch eine Steuer- und/oder Regeleinheit sind entsprechend gemessene Druckwerte in den Druckleitungen mit einem errechneten Solldruck vergleichbar. Es kann beispielsweise vorgesehen sein, dass dasjenige Ventil betätigt wird, das für die Zuführung von Druckluft zu einem Bremsaggregat wie beispielsweise einem Bremszylinder zuständig ist, bei dem der Druck in der Zuführleitung zu diesem Bremsaggregat am weitesten vorn Soll wert entfernt ist Es kann vorzugsweise auch ein Prioritätsmanager vorgesehen sein, mittels dem mittels entsprechend vorgebbaren Prioritäten die Steuerventile betätigt werden können. Die höchste Priorität kann hierbei ein Roll-Over-Schutz sein. Als nächste Priorität kann eine spurtreue Verwendung finden.

Wenn vorzugsweise das Verfahren in der Anhängerbremsanlage dann zur Anwendung kommt, wenn die Strom- und/oder Spannungsversorgung der Anhängerbremsanlage über eine zweite Versorgungsleitung, vorzugsweise über eine Stopplichtversorgungsleitung, geschieht, ist eine besonders hohe Variabilität der Funktion der Anhängerbremsanlage gegeben. Der entsprechende Fall tritt beispielsweise, wie oben schon angedeutet, dann ein, wenn die Versorgungsleitung nicht gesteckt oder anderweitig defekt ist.

Bei der Versorgungsleitung handelt es sich vorzugsweise um eine Strom- und/oder Spannungsversorgungsleitung gemäß ISO 7638, wohingegen die Strom- und/oder Spannungsversorgung über die Stopplichtversorgungsleitung gemäß ISO 1185 vorgesehen sein kann. Bei der Verfahrensführung gemäß dieser bevorzugten Ausführungsform ist auch eine volle ABS- und EBS-Funktionalität möglich. ABS ist ein Antiblockiersystem und EBS ist ein elektronisches Bremssystem.

Da erst in dem Moment eine Spannung in der Stopplichtversorgungsleitung beispielsweise vorherrscht, in dem das Bremspedal betätigt wurde, ist die elektropneumatische Anhängerbremsanlage beziehungsweise der elektronische Teil dieser Anhängerbremsanlage kurzfristig zu initialisieren. Hierfür benötigt diese typischerweise einen Zeitraum von ca. 250 ms. Diese Zeit ist allerdings relativ unkritisch, da die Druckluft länger benötigt, um in den Bremsaggregaten aufgebaut zu werden, so dass eine volle Funktionsfähigkeit der Steuer- und/oder Regeleinheit der elektropneumatischen Anhängerbremsanlage gegeben ist, bevor eine entsprechende Bremswirkung einsetzt.

Wenn das Backup-Ventil pulsweitenmoduliert angesteuert wird, ist ein geringerer Energieverbrauch gegeben. Beim ersten Ansteuern des Backup-Ventils wird beispielsweise eine Leistung von 100 % benötigt. Bei einer entsprechenden pulsweitenmodulierten Ansteuerung werden dann nach Schalten des Backup-Ventils in die bestromte Stellung beispielsweise nur noch 70 % der Leistung benötigt. Diese erfindungsgemäße Weiterbildung nutzt die Erkenntnis aus, dass ein geschaltetes Ventil durch eine geringere Leistung in der Schaltstellung bleibt, als benötigt wird, wenn das Ventil geschaltet wird.

Die Aufgabe wird ferner durch ein Verfahren zum Betrieb einer elektropneumatischen Anhängerbremsanlage gelöst, wobei jeder Seite wenigstens einer Anhängerachse wenigstens zwei Steuerventile zugeordnet sind, mittels der ein einem Bremswunsch entsprechender Druck, der auf wenigstens ein Bremsaggregat der wenigstens einen Anhängerachse wirkt, gesteuert wird, wobei bei einer Störung in der Anhängerbremsanlage zur Ansteuerung wenigstens eines den Bremsaggregaten vorgelagerten Ventils Druckluft aus einem Steuerkreis verwendet wird. Durch das erfindungsgemäße Verfahren ist eine gute Bremsfunktion, insbesondere ein ABS und auch ein EBS auch dann möglich, wenn eine Störung in der Anhängerbremsanlage vorliegt. Bei einer Störung handelt es sich im Rahmen der Erfindung beispielsweise um einen defekten Sensor, beispielsweise ein defekter Sensor in dem Steuerkreis, so dass ein Bremswunsch, der beispielsweise mittels dieses Sensors gemessen werden würde und in der Steuer- und/oder Regeleinheit verarbeitet werden würde, nicht mehr erkennbar ist und somit nicht verarbeitet werden kann. Im Rahmen der Erfindung ist der Steuerkreis insbesondere auch der Bremspedalkreis. Bei dem den Bremsaggregaten vorgelagerten Ventil kann es sich vorzugsweise um ein Relaisventil handeln, das mittels eines Steuerdrucks wie beispielsweise aus dem Steuerkreis angesteuert werden kann und entsprechend Druckluft aus dem Betriebsdruckluftkreis zu den Bremsaggregaten durchsteuern kann. Ein Relaisventil hat somit eine Art Verstärkungsfunktion.

Wenn vorzugsweise je Seite wenigstens einer Anhängerachse ein Backup-Ventil in der Funktion eines Belüftungsventils und ein Entlüftungsventil angesteuert werden, ist auf besonders einfache Art und Weise eine volle Funktionsfähigkeit der Bremsanlage, insbesondere auch ABS und EBS oder ALB (automatisches lastabhängiges Bremsen) möglich. Eine Ansteuerung ist in diesem Fall insbesondere eine elektrische Ansteuerung Das ansonsten üblicherweise verwendete Belüftungsventil wird in diesem Fall vorzugsweise abgesperrt und beispielsweise nicht bestromt, so dass in der durch eine Feder vorgegebenen Stellung eine nicht Druckluft durchleitende Stellung des Belüftungsventils vorgesehen ist.

Durch die erfindungsgemäßen und weitergebildeten Verfahren ist es möglich, weitere über den bekannten Betriebsmodi erfindungsgemäße Modi der Anhängerbremsanlage vorzusehen. Als bekannte Modi gilt ein Standard-Betriebsmodus, bei dem eine permanente elektrische Energieversorgung vorgesehen ist und eine vollständige Funktionsfähigkeit der Standard-Betriebsbremse ermöglicht ist. Als weiterer Modus ist ein pneumatischer Backup-Modus vorgesehen, bei dem keine elektrische Versorgung gegeben ist. Die durch die erfindungsgemäßen Verfahren möglichen weiteren Modi sind beispielsweise diejenigen, dass bei einer elektrischen Versorgung über beispielsweise eine zweite Versorgungsleitung wie beispielsweise die Stopplichtversorgungsleitung auch eine vollständige Funktion der Anhängerbremsanlage gegeben ist und insbesondere auch ABS und EBS sowie weitere Funktionen wie beispielsweise eine Roll-Over-Verhinderung. Dieser Modus wird dadurch erreicht, dass eine geschickte Ansteuerung der Steuerventile vorgesehen ist, insbesondere diejenige Ansteuerung, dass zur Zeit nur ein einziges Ventil angesteuert wird. Ein weiterer, durch die Erfindung ermöglichter Modus ist dann gegeben, wenn zwar eine Energieversorgung vorhanden ist, wie beispielsweise eine erste Versorgungsleitung oder eine zweite beziehungsweise Ersatzversorgungsleitung, allerdings ein Fehler vorherrscht, so dass nicht der Standard-Betriebsmodus gefahren werden kann, sondern beispielsweise anstelle des normalen Belüftungsventils je Seite ein Backup-Ventil die Funktion des Belüftungsventils erfüllt.

Die Aufgabe wird ferner durch eine elektropneumatische Anhängerbremsanlage, umfassend eine elektronische Steuer- und/oder Regelvorrichtung zum Erfassen und/oder Verarbeiten des Betriebszustandes des Anhängers und zum Steuern und/oder Regeln von Ventilen der Anhängerbremsanlage gelöst, wobei je Seite wenigstens einer Anhängerachse wenigstens drei Steuerventile vorgesehen sind.

Durch Vorsehen von wenigstens drei Steuerventilen je Seite ist eine entsprechende hohe Variabilität der Funktion der Anhängerbremsanlage gegeben, wobei die eben beschriebenen vier Modi durchgeführt werden können.

Vorzugsweise ist ein Steuerventil ein Backup-Ventil, das stromlos geschlossen ist. Im stromlosen Fall leitet das Backup-Ventil also Druckluft. Wenn ein Steuerventil ein Belüftungsventil ist, das stromlos offen ist, ist dieses bei einem Ausfall der Strom- und/oder Spannungsversorgung gesperrt, so dass das Backup-Ventil auf jeder Seite die Funktion des Belüftungsventils übernehmen kann, beziehungsweise so dass ein pneumatisches Backup möglich ist.

Vorzugsweise ist ein Steuerventil ein Entlüftungsventil, das stromlos offen ist. Durch dieses Entlüftungsventil ist insbesondere ein pneumatisches Backup möglich.

In einer bevorzugten Ausführungsform der erfindungsgemäßen Anhängerbremsanlage ist im normalen Betriebsmodus der Anhängerbremsanlage ein Bremswunsch mittels Ansteuerung des Belüftungsventils und des Entlüftungsventils auf jeder Seite realisierbar. Durch eine derartig ausgestaltete Anhängerbremsanlage ist ein Standard-Betriebsmodus realisierbar. Wenn vorzugsweise die Ansteuerung des Belüftungsventils und des Entlüftungsventils abwechselnd durchführbar ist, ist eine ABS, EBS oder ALB-Funktion realisierbar. Wenn vorzugsweise bei Nichtvorhandensein einer ersten Strom- und/oder Spannungsversorgung eine zweite Strom- und/oder Spannungsversorgung vorgesehen ist, wobei ein Bremswunsch mittels Ansteuerung der Belüftungsventile und der Entlüftungsventile jeweils einzeln realisierbar ist, ist ein Modus des Betriebes der Anhängerbremsanlage realisierbar, der auch bei Ausfall einer ersten Strom- und/oder Spannungsversorgung eine im wesentlichen vollständige Funktion der Anhängerbremsanlage ermöglicht.

Es sind insbesondere die ABS-, EBS- und ALB-Funktionen realisierbar und auch ein Roll-Over-Schutz ist möglich.

Vorzugsweise sind die Belüftungsventile und die Entlüftungsventile in einem Zeitintervall zwischen 5 ms und 100 ms, insbesondere vorzugsweise 10 ms und 100 ms, ansteuerbar.

Wenn die Backup-Ventile in einer die Druckluft sperrenden Stellung haltbar sind, ist ein Standard-Betriebsmodus auf einfache Art und Weise realisierbar. Vorzugsweise sind die Backup-Ventile pulsweitenmoduliert ansteuerbar.

Wenn das Backup-Ventil je Seite die Funktion des jeweiligen Belüftungsventils der jeweiligen Seite erfüllt, wobei das jeweilige Belüftungsventil in einer Stellung ist, die Druckluft nicht durchlässt, ist ein Betrieb der Anhängerbremsanlage auch bei einem Fehler in der Anhängerbremsanlage möglich. Vorzugsweise wird das übliche Belüftungsventil stromlos geschaltet. Wenn im Falle einer Unterbrechung der Strom- und/oder Spannungsversorgung der Anhängerbremsanlage das jeweilige Backup-Ventil den Steuerdruck aus dem Steuerkreis zu einem den jeweiligen Bremsaggregaten vorgelagerten Ventil zur Steuerung dieses Ventils leitet, ist eine pneumatische Backup-Funktion möglich. Vorzugsweise ist je Seite wenigstens ein Relaisventil vorgesehen, das insbesondere dem den jeweiligen Bremsaggregaten vorgelagerten Ventil entspricht.

Eine besonders Platz sparende Bauweise ist dann gegeben, wenn eine gemeinsame Entlüftung vorgesehen ist.

Die Aufgabe wird ferner durch eine elektropneumatische Anhängerbremsanlage, umfassend eine elektronische Steuer- und/oder Regelvorrichtung zum Erfassen und/oder Verarbeiten des Betriebszustandes des Anhängers und zum Steuern und/oder Regeln von Ventilen der Anhängerbremsanlagen gelöst, wobei ein Bremswunsch mittels Ansteuerung eines Belüftungsventils und eines Entlüftungsventils je Seite wenigstens einer Anhängerachse realisierbar ist, wobei jeweils von den vier Ventilen bzw. den Belüftungsventilen und Entlüftungsventilen nur ein Ventil ansteuerbar ist. Mittels einer derartigen erfindungsgemäßen Anhängerbremsanlage ist auch eine vollständige Funktion des Betriebs der Anhängerbremsanlage möglich, wenn die Strom- und/oder Spannungsversorgung über eine Leitung geschieht, die nur eine relativ geringe Leistung zulässt. Vorzugsweise ist die erfindungsgemäße Anhängerbremsanlage mit einem oder mehreren der Merkmale der vorstehend beschriebenen elektropneumatischen Anhängerbremsanlage versehen.

Die Aufgabe wird ferner durch die Verwendung von wenigstens drei Steuerventilen je Seite wenigstens einer Anhängerachse zur Versorgung von Bremsaggregaten einer Anhängerbremsanlage mit einer einem Bremswunsch entsprechenden Druckluft gelöst

Die Erfindung wird nachstehend ohne Beschränkung des allgemeinen Erfindungsgedankens anhand von Ausführungsbeispielen unter Bezugnahme auf die Zeichnungen exemplarisch beschrieben. Es wird bezüglich aller im Text nicht näher erläuterten erfindungsgemäßen Einzelheiten ausdrücklich auf die Zeichnungen verwiesen:
- Fig. 1: zeigt eine schematische Übersicht einer Anhängerbremsanlage,
- Fig. 2: zeigt eine schematische Beschaltung eines erfindungsgemäßen Anhängerbremsanlagenmoduls,
- Fig. 3: zeigt das Schema der Fig. 2 in einem anderen Betriebsmodus, und
- Fig. 4: zeigt das Schema der Fig. 2 in einem weiteren Betriebsmodus.

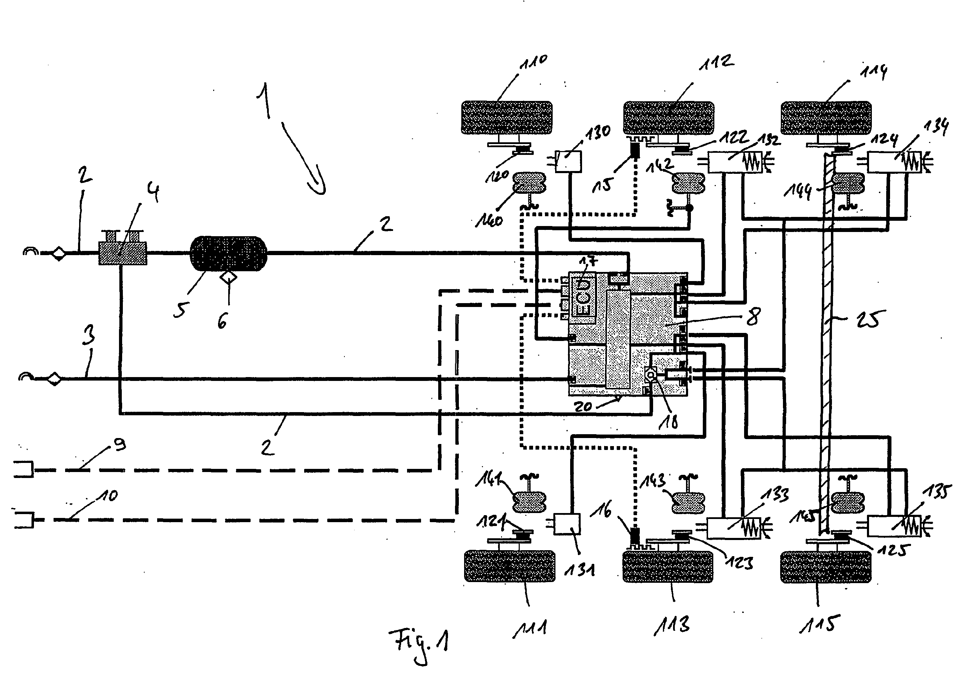

Fig. 1 zeigt eine schematische Übersicht über eine elektropneumatische Anhängerbremsanlage 1. Über eine Steckerverbindung ist eine Betriebsdruckluftleitung 2 über ein Doppellöseventil 4 mit integrierter Abrissfunktion und einen Druckluftbehälter 5 mit einem Anhängerbremsmodul 8 verbunden. Das Doppellöseventil 4 mit integrierter Abrissfunktion sieht eine Notbremsung bei Abriss der Vorratsleitung 2 vor. In dem Doppellöseventil 4 ist ein Abzweig der Betriebsdruckluftleitung 2 vorgesehen, die auch zum Anhängerbremsmodul 8 führt. Die in dem Druckluftbehälter 5 speicherbare Druckluft dient zum Vorsehen einer möglichst schnellen Bremsfunktion. An dem Druckluftbehälter 5 ist ein Entwässerungsventil 6 vorgesehen.

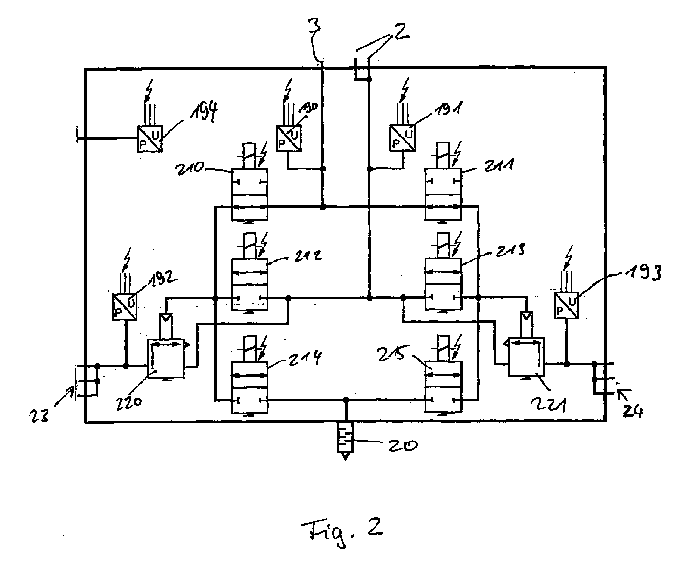

Ein dem Bremswunsch entsprechender Druck wird über eine mit einem Stecker verbundene Steuerluftleitung 3 dem Anhängerbremsmodul 8 zugeführt. Der Bremswunsch kann auch über entsprechende elektrische Leitungen wie beispielsweise eine Steuerleitung in einer elektrischen Leitung 9 oder eine Steuerleitung in einer elektrischen Leitung 10 dem Anhängerbremsmodul 8 zugeführt werden. Ein derartiger Bremswunsch kann beispielsweise durch die Schnelligkeit des Betätigens der Bremse beziehungsweise den Druck, der durch den Fuß auf dem Bremspedal wirkt, entsprechend berechnet werden, beispielsweise in einer Steuer- und/oder Regelvorrichtung im Zugfahrzeug bzw. in der elektronischen Steuereinheit 17 des Anhängerbremsmoduls 8. Die elektrische Leitung 9 kann beispielsweise eine ISO 7638-Leitung sein, also 7 Kabelverbindungen vorsehen. Die elektrische Leitung 10 kann beispielsweise eine ISO 1185-Leitung sein und auch entsprechend 7 Leitungen beziehungsweise Kabel umfassen. Die elektrischen Leitungen 9 und 10 sind mit der elektronischen Steuereinheit 17 des Anhängerbremsmoduls 8 direkt verbunden. Mit der elektronischen Steuereinheit 17 sind gemäß Fig. 1 beispielsweise auch Drehzahlsensoren 15 und 16 verbunden und des Weiteren entsprechende Drucksensoren 190 bis 194, die in den Figuren 2 bis 4 dargestellt sind. Die von diesen Sensoren kommenden Signale können in der elektronischen Steuereinheit 17 entsprechend ausgewertet werden und zu den verschiedensten Bremsfunktionen führen.

Das Anhängerfahrzeug gemäß Fig. 1 umfasst in diesem Fall drei Achsen 25, wobei der Übersichtlichkeit wegen nur eine Achse 25 schematisch dargestellt ist. Die sechs Räder 110 bis 115 - auf jeder Seite drei Räder 110, 112, 114 und 111, 113 und 115 - werden mittels entsprechender Bremsen 120 bis 125, die als Scheibenbremsen ausgebildet sein können, abgebremst. Zur Betätigung der Bremsklötze sind Bremszylinder 130 bis 134 vorgesehen, wobei die Bremszylinder 130 und 131 der vorderen Achse einfache Bremszylinder sind und die Bremszylinder 132 bis 134 der beiden hinteren Achsen Speicherbremszylinder sind.

In der Anhängerbremsanlage gemäß Fig. 1 ist eine Additionsverhinderung vorgesehen, die mittels eines Wechselventils 18 realisierbar ist. Die Ausgänge des Wechselventils 18 sind mit den Federspeichern verbunden und führen im Rahmen der Additionsverhinderung dazu, dass nicht die vollständige Kraft der Federn und der entsprechenden Druckluft auf die Bremse wirken kann, so dass diese gegebenenfalls beschädigt werden würde. Ferner ist eine entsprechende Entlüftung 20 beziehungsweise ein Auslass 20 an dem Bremsmodul 8 vorgesehen. Die entsprechenden Achsen sind auf jeder Seite durch bekannte Luftbalge 140 bis 145 in der Höhe variierbar.

Fig. 2 zeigt das Anhängerbremsmodul 8 in genauerer Ausführung, wobei nur ein Teil dieses Anhängerbremsmoduls 8 beziehungsweise des Anhänger-EBS-Moduls dargestellt ist. Die Betriebsdruckluftleitung 2 führt Druckluft zu Belüftungsventilen 212 und 213, die jeweils an einer Seite den 3 Achsen zugeordnet sind. Entsprechend führt die Steuerluftleitung 3 Steuerdruckluft zu den Backup-Ventilen 210 und 211 auf jeder Seite. Die entsprechenden Luftdrücke werden mittels Druckluftsensoren 190 - für die Steuerleitung - und 191 - für die Betriebsdruckluftleitung 2 - gemessen. Es wird ferner mittels eines Lastsensors 194 die Beladung des Anhängers gemessen, um eine beladungsabhängige Bremsung zu ermöglichen. Wenn beispielsweise der Anhänger nicht beladen ist, ist es nicht notwendig, die Betriebsdruckluft bei vollem Druck vorrätig zu halten. Es ist vielmehr ein niedrigerer Betriebsdruck bei voller Funktionalität der Anhängerbremsanlage möglich. Hierzu wird insbesondere auf die Offenbarung der DE 102 07 803.3 der Anmelderin verwiesen, deren Offenbarungsgehalt vollumfänglich in dieser Anmeldung mit aufgenommen sein soll.

Das Anhängerbremsmodul 8 umfasst ferner je Seite ein Entlüftungsventil 214 und 215, die auf der einen Seite mit den Stellgliedern der Relaisventile 220 und 221 verbunden sind und ferner mit den Backup-Ventilen 210 und 211 und auf der anderen Seite mit einem gemeinsamen Auslass 20, der in diesem Ausführungsbeispiel mit einem Schalldämpfer versehen ist. Die Relaisventile 220 und 221 dienen zum Durchsteuern der Betriebsdruckluft aus der Betriebsdruckluftleitung 2 zu entsprechenden Bremsaggregaten wie Bremszylinder 130 bis 135 über die Anschlüsse 23 und 24 zu den Bremszylindern. Der an den Bremszylindern anliegende Druck der Druckluft wird mittels Drucksensoren 192 und 193 auf jeder Seite gemessen. In Fig. 2 sind die dargestellten Ventile im unbestromten Zustand dargestellt. Die elektrischen Stellglieder, wobei die Elektrik mit entsprechenden Blitzen schematisch angedeutet ist, sind somit unbestromt und die Ventile sind in der federbelasteten Stellung. In dieser Stellung der entsprechenden Ventile ist ein pneumatisches Backup beispielsweise möglich, bei der über den in der Steuerluftleitung 3 vorherrschenden Druckluft von beispielsweise 3 bar, die durch die Betätigung des Bremspedals erzeugt wird, über die Backup-Ventil 210 und 211 ein entsprechendes Ansteuern der Stellglieder der Relaisventile 220 und 221 ermöglicht ist, wodurch die Betriebsdruckluft mit entsprechendem Druck den Bremsaggregaten zur Verfügung gestellt wird.

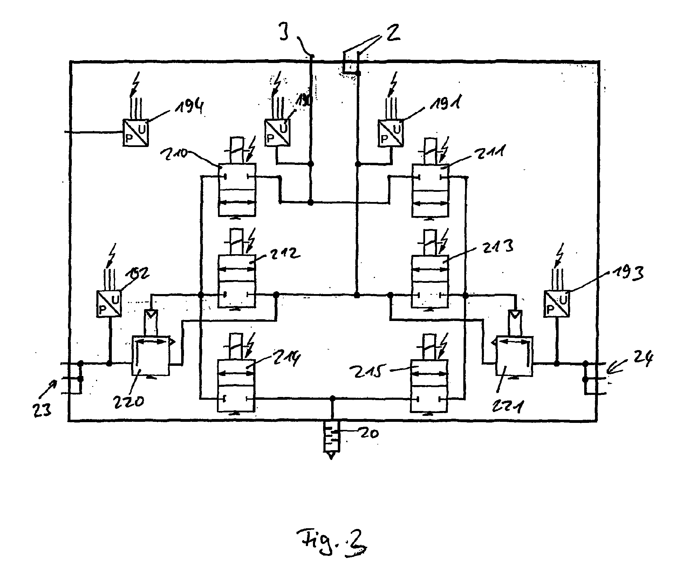

In der Betriebsstellung der Fig. 3 sind die Backup-Ventile 210 und 211 entsprechend bestromt, so dass diese sperrend gehalten sind. Hierbei findet beispielsweise eine pulsweitenmodulierte Ansteuerung der Stellglieder der Backup-Ventile 210 und 211 statt. Die weiteren Steuerventile 212 bis 215 können entsprechend erfindungsgemäß angesteuert werden, sei es durch die erste Strom- und/oder Spannungsversorgungsleitung oder durch eine zweite Strom- und/oder Spannungsversorgung wie beispielsweise die Bremslichtversorgung bzw. Stopplichtversorgung. Im Falle der ersten Spannungsversorgung, die vorzugsweise für ausreichend viel Strom bzw. Leistung dimensioniert ist, können gleichzeitig jeweils ein Belüftungsventil 212 beziehungsweise 213 und ein Entlüftungsventil 214 beziehungsweise 215 angesteuert werden, so dass zur gleichen Zeit jeweils ein Steuerventil und ein Backup-Ventil pro Seite angesteuert werden kann. Für den Fall, dass eine 2. Strom- und/oder Spannungsversorgungsleitung Verwendung findet, wie beispielsweise die Stopplichtversorgungsleitung, wird nur eines der vier Steuerventile 212 bis 215 zur Zeit angesteuert. In beiden Fällen ist ABS und EBS beziehungsweise ALB möglich, wobei bei einer Versorgung mit beispielsweise der Stopplichtversorgungsleitung die beiden Seiten nicht unabhängig voneinander geregelt werden, nicht unabhängig voneinander geregelt werden, sondern nacheinander. Die Schaltfrequenz liegt hierbei zwischen 5 und 100 ms und vorzugsweise zwischen 10 und 100 ms.

Die Regelung ist vorzugsweise durch eine Software in der elektronischen Steuereinheit 17 vorgesehen. Als Beispielswert ist ein maximaler Stromverbrauch von 3,35 A bei der Realisierung der Anhängerbremsanlage vorgesehen, bei der zur Zeit nur ein Steuerventil beziehungsweise eines der vier Be- und Entlüftungsventile angesteuert wird und ein maximaler Stromverbrauch bei gleichzeitiger Ansteuerung von zwei Ventilen der vier Be- und Entlüftungsventile von 4,45 A. Ein entsprechend geringerer Stromverbrauch durch Ansteuerung der Backup-Ventil 210 und 211 ist dadurch realisierbar, dass diese nach dem Ansteuern beziehungsweise Umschalten in die sperrende Stellung, pulsweitenmoduliert angesteuert werden. Hierdurch wird 30 % weniger Strom verbraucht.

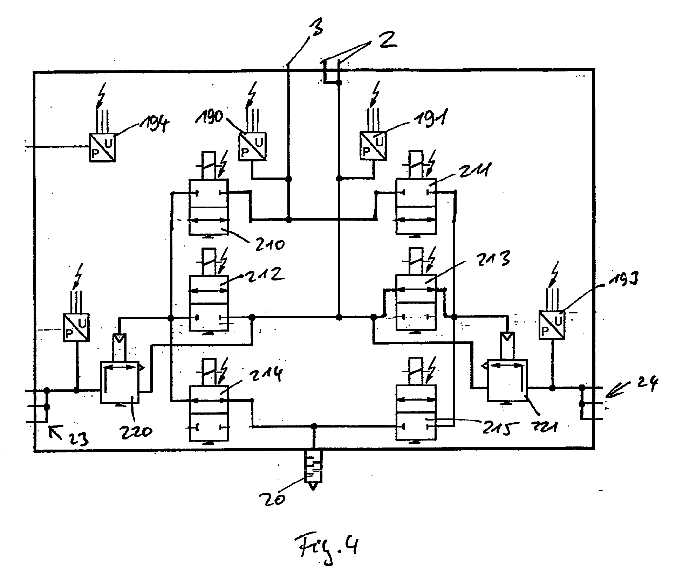

Fig. 4 schematisch die entsprechenden Ventile in einer Stellung dergestalt, dass das Entlüftungsventil 214 der linken Seite und das Belüftungsventil 213 der rechten Seite des Anhängers entsprechend bestromt sind. Auch in diesem Ausführungsbeispiel sind die Backup-Ventile 210 und 211 entsprechend pulsweitenmoduliert angesteuert.

Durch Vorsehen der Relaisventile 220 und 221 ist es möglich, durch ein kleines Steuervolumen an Druckluft ein großes Arbeitsvolumen entsprechend hohen Druckes zu steuern.

Mit der erfindungsgemäßen Anhängerbremsanlage ist es möglich, sowohl im Standard-Betriebsmodus als auch in einem Betriebsmodus mit einer Strom- und/oder Spannungsversorgung über eine zweite Versorgungsleitung, insbesondere eine Stopplichtversorgungsleitung, sämtliche Funktionen der Anhängerbremsanlage, die gewünscht sind, durchzuführen. Selbst bei Auftreten eines Fehlers, beispielsweise wenn ein entsprechender Drucksensor ausfällt, ist noch eine ABS-Bremsung möglich. Mit der erfindungsgemäßen Anhängerbremsanlage wird ferner die Gefahr eines Überschlags (Roll-Over) reduziert. Hierzu ist beispielsweise ein Querbeschleunigungssensor auf der Platine des Anhängerbremsmoduls 8 vorgesehen, das bei Überschreiten ein Grenzwertes die als vermutlich in der Luft befindlichen Seite des Anhängers mit Bremsdruck versieht, um festzustellen, ob die ABS-Funktion ausgelöst wird. Sofern dieses der Fall ist, wird die andere Seite stark eingebremst, um einen Überschlag zu verhindern. Es wird somit mit der erfindungsgemäßen Anhängerbremsanlage eine verbesserte Kompatibilität des Zugfahrzeugs zum Anhänger ermöglicht, die Ansprechzeit der Bremse wird verringert und der Anhalteweg verkürzt. Es ist außerdem eine sehr hohe Variabilität der Anhängerbremsanlage möglich.

### Bezugszeichenliste

- 1: Anhängerbremsanlage
- 2: Betriebsdruckluftleitung
- 3: Steuerluftleitung
- 4: Doppellöseventil mit integrierter Abrißfunktion
- 5: Druckluftbehälter
- 6: Entwässerungsventil
- 8: Anhängerbremsmodul
- 9: elektrische Leitung
- 10: elektrische Leitung
- 110 - 115: Rad
- 120 -125: Bremse
- 130, 131: Bremszylinder
- 132 - 134: Federspeicher-Bremszylinder
- 140 - 145: Luftbalg
- 15, 16: Drehzahlsensor
- 17: elektronische Steuereinheit
- 18: Wechselventil
- 190 - 193: Drucksensor
- 194: Lastsensor
- 20: Auslaß
- 210, 211: Backup-Ventil
- 212, 213: Belüftungsventil
- 214, 215: Entlüftungsventil
- 220, 221: Relaisventil
- 23, 24: Anschluß zum Bremszylinder
- 25: Achse

## Patentansprüche

1. Verfahren zum Betrieb einer elektropneumatischen Anhängerbremsanlage (1), wobei jeder Seite wenigstens einer Anhängerachse (25) wenigstens zwei Steuerventile (210 - 215) zugeordnet sind, mittels der ein einem Bremswunsch entsprechender Druck, der auf wenigstens ein Bremsaggregat (130 - 135) der wenigstens einen Anhängerachse (25) wirkt, gesteuert wird, **dadurch gekennzeichnet, dass** nur ein Steuerventil (210 - 215) zur Zeit zur Steuerung des Drucks für das wenigstens eine Bremsaggregat (130 - 135) angesteuert wird, wobei jeder Seite außerdem ein Backup-Ventil (210, 211) zugeordnet ist, wobei das Backup-Ventil (210, 211) bei vorhandener Strom- und/oder Spannungsversorgung der Anhängerbremsanlage (1) in einer Druckluft nicht durchleitenden Stellung gehalten wird.

2. Verfahren nach Anspruch 1, **dadurch gekennzeichnet, dass** das jeweilige Steuerventil (210 - 215) in einem Zeitraum zwischen 5 ms und 100 ms, vorzugsweise zwischen 10 ms und 100 ms, angesteuert wird.

3. Verfahren nach Anspruch 1 oder 2, **dadurch gekennzeichnet, dass** das Verfahren in der Anhängerbremsanlage (1) dann zur Anwendung kommt, wenn die Strom- und/oder Spannungsversorgung der Anhängerbremsanlage (1) über eine zweite Versorgungsleitung (10), vorzugsweise über eine Stopplichtversorgungsleitung, geschieht.

4. Verfahren nach Anspruch 3, **dadurch gekennzeichnet, dass** das Backup-Ventil (210, 211) pulsweitenmoduliert angesteuert wird.

5. Verfahren zum Betrieb einer elektropneumatischen Anhängerbremsanlage (1) nach Patentanspruch 1, **dadurch gekennzeichnet, dass** bei einer Störung in der Anhängerbremsanlage (1) zur Ansteuerung wenigstens eines den Bremsaggregaten (130 - 135) vorgelagerten Ventils (20, 221) Druckluft aus einem Steuerkreis (3) verwendet wird.

6. Verfahren nach Anspruch 5, **dadurch gekennzeichnet, dass** je Seite wenigstens einer Anhängerachse (25) ein Backup-Ventil (210, 211) in der Funktion eines Belüftungsventils und ein Entlüftungsventil (214, 215) angesteuert werden.

7. Elektropneumatische Anhängerbremsanlage (1), umfassend eine elektronische Steuer- und/oder Regelvorrichtung (17) zum Erfassen und/oder Verarbeiten des Betriebszustandes des Anhängers und zum Steuern und/oder Regeln von Ventilen (210 - 215, 220, 221) der Anhängerbremsanlage (1), **dadurch gekennzeichnet, dass** je Seite wenigstens einer Anhängerachse (25), wenigstens drei Steuerventile (210 - 215) vorgesehen sind.

8. Anhängerbremsanlage nach Anspruch 7, **dadurch gekennzeichnet, dass** ein Steuerventil (210 - 215) ein Backup-Ventil (210, 211) ist, das stromlos geschlossen ist.

9. Anhängerbremsanlage nach Anspruch 7 oder 8, **dadurch gekennzeichnet, dass** ein Steuerventil (210 - 215) ein Belüftungsventil (212, 213) ist, das stromlos offen ist.

10. Anhängerbremsanlage nach einem oder mehreren der Ansprüche 7 bis 9, **dadurch gekennzeichnet, dass** ein Steuerventil (210 - 215) ein Entlüftungsventil (214, 215) ist, das stromlos offen ist.

11. Anhängerbremsanlage nach einem oder mehreren der Ansprüche 7 bis 10, **dadurch gekennzeichnet, dass** im normalen Betriebsmodus der Anhängerbremsanlage ein Bremswunsch mittels Ansteuerung des Belüftungsventils (212, 213) und des Entlüftungsventils (214, 215) auf jeder Seite realisierbar ist.

12. Anhängerbremsanlage nach Anspruch 11, **dadurch gekennzeichnet, dass** die Ansteuerung des Belüftungsventils (212, 213) und des Entlüftungsventils (214, 215) abwechselnd durchführbar ist.

13. Anhängerbremsanlage nach einem oder mehreren der Ansprüche 9 bis 12, **dadurch gekennzeichnet, dass** bei Nichtvorhandensein einer ersten Strom- und/oder Spannungsversorgung (9) eine zweite Strom- und/oder Spannungsversorgung (10) vorgesehen ist und dass ein Bremswunsch mittels Ansteuerung der Belüftungsventile (212, 213) und der Entlüftungsventile (214, 215) jeweils einzeln realisierbar ist.

14. Anhängerbremsanlage nach Anspruch 13, **dadurch gekennzeichnet, dass** die Belüftungsventile (212, 213) und die Entlüftungsventile (214, 215) in einem Zeitintervall zwischen 5 ms und 100 ms, vorzugsweise 10 ms und 100 ms, ansteuerbar sind.

15. Anhängerbremsanlage nach einem oder mehreren der Ansprüche 11 bis 14, **dadurch gekennzeichnet, dass** die Backup-Ventile (210, 211) in einer die Druckluft sperrenden Stellung haltbar sind.

16. Anhängerbremsanlage nach einem oder mehreren der Ansprüche 7 bis 15, **dadurch gekennzeichnet, dass** das Backup-Ventil (210, 211) je Seite die Funktion des jeweiligen Belüftungsventils (212, 213) erfüllt, wobei das jeweilige Belüftungsventil (212, 213) in einer Stellung ist, die Druckluft nicht durchlässt.

17. Anhängerbremsanlage nach einem oder mehreren der Ansprüche 7 bis 16, **dadurch gekennzeichnet, dass** im Fall einer Unterbrechung der Strom- und/oder Spannungsversorgung (9, 10) der Anhängerbremsanlage (1) das jeweilige Backup-Ventil (210, 211) den Steuerdruck aus dem Steuerkreis (3) zu einem den jeweiligen Bremsaggregaten (130 - 135) vorgelagerten Ventil (220, 221) zur Steuerung dieses Ventils (220, 221) leitet.

18. Anhängerbremsanlage nach einem oder mehreren der Ansprüche 7 bis 17, **dadurch gekennzeichnet, dass** je Seite wenigstens ein Relaisventil (220, 221) vorgesehen ist.

19. Anhängerbremsanlage nach einem oder mehreren der Ansprüche 7 bis 18, **dadurch gekennzeichnet, dass** eine gemeinsame Entlüftung (20) vorgesehen ist.

20. Anhängerbremsanlage nach dem Oberbegriff des Anspruchs 7, **dadurch gekennzeichnet, dass** ein Bremswunsch eines Belüftungsventils (212, 213) und eines Entlüftungsventils (214, 215) je Seite wenigstens einer Anhängerachse (25) mittels Ansteuerung realisierbar ist, wobei jeweils von den vier Ventilen (212 bis 215) nur ein Ventil (212 - 215) ansteuerbar ist.

21. Verwendung von wenigstens drei Steuerventilen (210 - 215) je Seite wenigstens einer Anhängerachse (25) zur Versorgung von Bremsaggregaten (130 - 135) einer Anhängerbremsanlage (1) mit einer einem Bremswunsch entsprechenden Druckluft.

## Claims

1. Method of operating an electro-pneumatic trailer brake system (1), wherein at least two control valves (210 - 215) are associated with each side of at least one trailer axle (25), by means of which a pressure is controlled that acts upon at least one brake unit (130 - 135) of said at least one trailer axle (25), **characterised in that** only one control valve (210 - 215) is controlled by the time of pressure control for said at least one brake unit (130 - 135), with a backup valve (210, 211) being additionally associated with each side, which backup valve (210 - 211) is maintained in a position not passing through compressed air when a current and/or voltage supply of said trailer brake system (1) is present.

2. Method according to Claim 1, **characterised in that** the respective control valve (210 - 215) is controlled in an interval in the range from 5 ms to 100 ms, preferably between 10 ms and 100 ms.

3. Method according to Claim 1 or 2, **characterised in that** the method is applied in said trailer brake system (1) whenever said trailer brake system (1) is supplied with current and/or voltage via a second supply line (10), preferably via a stop light supply line.

4. Method according to Claim 3, **characterised in that** said backup valve (210, 211) is controlled with pulse width modulation.

5. Method of operating an electro-pneumatic trailer brake system (1) according to Patent Claim 1, **characterised in that** in the case of trouble in said trailer brake system (1) compressed air from a control circuit (3) is used to control at least one valve (20, 221) mounted upstream of said brake units (130 - 135).

6. Method according to Claim 5, **characterised in that**, per side of at least one trailer axle (25), one backup valve (210, 211) performing the function of an aerating valve and one venting valve (214, 215) are controlled.

7. Electro-pneumatic trailer brake system (1), comprising an electronic control and/or closed-loop control device (17) for detecting and/or processing the operating state of the trailer and for control and/or closed-loop control of valves (210 - 215, 220, 221) of said trailer brake system (1), **characterised in that** at least three control valves (210 - 215) are provided per side of at least one trailer axle (25).

8. Trailer brake system according to Claim 7, **characterised in that** one control valve (210 - 215) is a backup valve (210, 211) that is closed in non-energised state.

9. Trailer brake system according to Claim 7 or 8, **characterised in that** one control valve (210 - 215) is an aerating valve (212, 213) that is open in the non-energised state.

10. Trailer brake system according to one or several of the Claims 7 to 9, **characterised in that** one control valve 210 - 215) is a venting valve 214, 251) that is open in the non-energised state.

11. Trailer brake system according to one or several of the Claims 7 to 10, **characterised in that** in the normal operating mode of the trailer brake system, a desired brake application can be realised by controlling said aerating valve (212, 213) and said venting valve (214, 215) on either side.

12. Trailer brake system according to Claim 11, **characterised in that** provisions are made for controlling said aerating valve (212, 213) and said venting valve (214, 215) in alternation.

13. Trailer brake system according to one or several of the Claims 7 to 12, **characterised in that** whenever a first current and/or voltage supply (9) is not present a second current and/or voltage supply (10) is provided and that a desired brake application can be realised separately by controlling each of said respective aerating valves (212, 213) and said venting valves (214, 215).

14. Trailer brake system according to Claim 13, **characterised in that** said aerating valves (212, 213) and said venting valves (214, 215) are controllable within an interval in the range from 5 ms to 100 ms, preferably from 10 ms to 100 ms.

15. Trailer brake system according to one or several of the Claims 11 to 14, **characterised in that** said backup valves (210, 211) can be maintained in a position inhibiting the flow of compressed air.

16. Trailer brake system according to one or several of the Claims 7 to 15, **characterised in that** said backup valve (210, 211) per side performs the function of the respective aerating valve (212, 213), with the respective aerating valve (212, 213) being in a position not permitting the passage of compressed air.

17. Trailer brake system according to one or several of the Claims 7 to 16, **characterised in that** in the case of an interruption of the current and/or voltage supply (9, 10) of said trailer brake system (1), the respective backup valve (210, 211) passes the control pressure from said control circuit (3) to a valve (220, 221) upstream of the respective brake units (130 - 135) for controlling this valve (220, 221).

18. Trailer brake system according to one or several of the Claims 7 to 17, **characterised in that** at least one relay valve (220, 221) is provided per side.

19. Trailer brake system according to one or several of the Claims 7 to 18, **characterised in that** a common venting device (20) is provided.

20. Trailer brake system according to the introductory clause of Claim 7, **characterised in that** a desired brake application of one aerating valve (212, 213) and of one venting valve (214, 215) per side of at least one trailer axle (25) can be realised by control, with only one respective valve (212, 215) among said four valves (212 to 215) being controllable.

21. Application of at least three control valves (210 - 215) per side of at least one trailer axle (25) for the supply of brake units (130 - 135) of a trailer brake system (1) with an amount of compressed air corresponding to the desired braking operation.

## Revendications

1. Procédé à commander un système de freinage électropneumatique de remorque (1), dans lequel au moins deux soupapes de distribution (210 - 215) sont affectées à chaque côté d'au moins d'un essieu de remorque (25), moyennant lequel une pression est commandée, qui agit sur au moins un groupe de frein (130 - 135) dudit au moins un essieu de remorque (25), **caractérisé en ce qu'**une seule soupape de distribution (210 - 215) est commandée au point du temps de commande de pression pour ledit au moins un groupe de frein (130 - 135), à une soupape de secours (210, 211) étant affectée, au plus, à chaque côté, laquelle soupape de secours (210 - 211) est maintenue en une position ne permettant le passage de l'air comprimé quand une alimentation en courant et/ou en tension dudit système de freinage de remorque (1) est présente.

2. Procédé selon la revendication 1, **caractérisé en ce que** ladite soupape de distribution (210 - 215) respective est commandée au-dedans d'une période entre 5 ms et 100 ms, de préférence entre 10 ms et 100 ms.

3. Procédé selon la revendication 1 ou 2, **caractérisé en ce que** le procédé est appliqué dans ledit système de freinage de remorque (1) quand ledit système de freinage de remorque (1) est alimenté en courant et/ou tension via un deuxième conduit d'alimentation (10), de préférence via un conduit d'alimentation du feu de frein.

4. Procédé selon la revendication 3, **caractérisé en ce que** ladite soupape de secours (210, 211) est commandée à modulation en largeur d'impulsions.

5. Procédé à commander un système de freinage électropneumatique de remorque (1) selon la Revendication 1, **caractérisé en ce qu'**au cas de perturbation dans ledit système de freinage de remorque (1), de l'air comprimé provenant d'un circuit de commande (3) est utilisé afin de commander au moins une soupape (20, 221) monté en amont desdites groupes de frein (130 - 135).

6. Procédé selon la revendication 5, **caractérisé en ce qu'**une soupape de secours (210, 211), qui réalise la fonction d'un clapet d'aération, et un clapet d'évacuation (214, 215) sont commandés par côté d'au moins un essieu de remorque (25)

7. Système de freinage électropneumatique de remorque (1), comprenant un dispositif électronique de commande et/ou de réglage (17) à détecter et/ou traiter l'état de marche de la remorque et à commander et/ou régler des soupapes (210 - 215, 220, 221) dudit système de freinage de remorque (1), **caractérisé en ce qu'**au moins trois soupapes de distribution (210 - 215) sont montées par côté d'au moins un essieu de remorque (25).

8. Système de freinage de remorque selon la revendication 7, **caractérisé en ce qu'**une soupape de distribution (210 - 215) est une soupape de secours (210, 211) qui est fermée en absence de courant.

9. Système de freinage de remorque selon la revendication 7 ou 8, **caractérisé en ce qu'**une soupape de distribution (210 - 215) est un clapet d'aération (212, 213) qui est ouvert en absence de courant.

10. Système de freinage de remorque selon une quelconque ou plusieurs des revendications 7 à 9, **caractérisé en ce qu'**une soupape de distribution 210 - 215) est un clapet d'évacuation 214, 251) qui est ouvert en absence de courant.

11. Système de freinage de remorque selon une quelconque ou plusieurs des revendications 7 à 10, **caractérisé en ce qu'**en régime de marche normal du système de freinage de remorque, il est possible de réaliser un actionnement souhaité de frein en commandant ledit clapet d'aération (212, 213) et ledit clapet d'évacuation (214, 215) de chaque côté.

12. Système de freinage de remorque selon la revendication 11, **caractérisé en ce qu'**il est possible de commander ledit clapet d'aération (212, 213) et ledit clapet d'évacuation (214, 215) de manière alternative.

13. Système de freinage de remorque selon une quelconque ou plusieurs des revendications 7 à 12, **caractérisé en ce que**, quand une première alimentation en courant et/ou en tension (9) n'est pas présente, une deuxième alimentation en courant et/ou en tension (10) est pourvue, et **en ce qu'**on peut réaliser un actionnement souhaité de frein de manière séparée en commandant chacun desdites clapets respectifs d'aération (212, 213) et d'évacuation (214, 215).

14. Système de freinage de remorque selon la revendication 13, **caractérisé en ce que** lesdits clapets d'aération (212, 213) et lesdits clapets d'évacuation (214, 215) sont commandables au-dedans une période entre 5 ms et 100 ms, de préférence entre 10 ms et 100 ms.

15. Système de freinage de remorque selon une quelconque ou plusieurs des revendications 11 à 14, **caractérisé en ce qu'**il est possible de maintenir lesdites soupapes de secours (210, 211) en une position d'arrêt du passage de l'air comprimé.

16. Système de freinage de remorque selon une quelconque ou plusieurs des revendications 7 à 15, **caractérisé en ce que** ladite soupape de secours (210, 211) par côté réalise la fonction du clapet respectif d'aération (212, 213), audit clapet respectif d'aération (212, 213) se trouvant en une position d'arrêt du passage de l'air comprimé.

17. Système de freinage de remorque selon une quelconque ou plusieurs des revendications 7 à 16, **caractérisé en ce qu'**au cas d'une interruption de l'alimentation en courant et/ou en tension (9, 10) dudit système de freinage de remorque (1), la soupape respective de secours (210, 211) passe la pression pilote à partir dudit circuit de commande (3) à une soupape (220, 221) en amont du groupe respectif de frein (130 - 135) afin de commander cette soupape (220, 221).

18. Système de freinage de remorque selon une quelconque ou plusieurs des revendications 7 à 17, **caractérisé en ce qu'**au moins une soupape de relais (220, 221) est montée par côté.

19. Système de freinage de remorque selon une quelconque ou plusieurs des revendications 7 à 18, **caractérisé en ce qu'**un dispositif commun d'évacuation (20) est disposé.

20. Système de freinage de remorque selon le préambule de la revendication 7, **caractérisé en ce qu'**un actionnement souhaité de frein d'un clapet d'aération (212, 213) et d'un clapet d'évacuation (214, 215) par côté d'au moins un essieu de remorque (25) se peut faire par commande, à une seule soupape respective (212, 215) parmi lesdites quatre soupapes (212 à 215) étant commandable.

21. Emploi d'au moins trois soupapes de distribution (210 - 215) par côté d'au moins un essieu de remorque (25) pour l'alimentation des groupes de frein (130 - 135) d'un système de freinage de remorque (1) en une quantité de l'air comprimé, qui corresponde à l'opération de freinage souhaitée.
